(19) Europäisches Patentamt
European Patent Office
Office européen des brevets

(11) Publication number: 0 030 786
A2

(12) # EUROPEAN PATENT APPLICATION

(21) Application number: 80303623.5

(22) Date of filing: 14.10.80

(51) Int. Cl.³: D 06 P 1/38
D 06 P 3/66, D 06 P 1/52

(30) Priority: 14.12.79 GB 7943100

(43) Date of publication of application:
24.06.81 Bulletin 81/25

(84) Designated Contracting States:
BE CH DE FR GB IT LI NL

(71) Applicant: IMPERIAL CHEMICAL INDUSTRIES LIMITED
Imperial Chemical House Millbank
London SW1P 3JF(GB)

(72) Inventor: Evans, Geoffrey Edward
48 Barlow Moor Court
West Didsbury, Manchester M20 8UX(GB)

(74) Representative: Marklow, Raymond Joseph et al,
Imperial Chemical Industries Limited Legal Department:
Patents Thames House North Millbank
London SW1P 4QG(GB)

(54) **Textile colouration process and textiles coloured thereby.**

(57) A process for colouring textiles with an aqueous preparation of reactive dyestuff and linear polyalkylene imine. pH of preparation adjusted to prevent unduly fast reaction before applied to textile and baked.

Convenient source of linear polyalkylene imines is hydrolysed poly 2-ethyl-2-oxazoline.

Coloured textiles are brighter than from corresponding process using polymerised alkylene imines which are branched at nitrogen atom.

EP 0 030 786 A2

Croydon Printing Company Ltd.

This invention relates to a textile colouration process in particular to a colouration process using reactive dyes.

UK patent specification 1409568 describes a process of colouring textile materials by treatment with a single aqueous phase containing a polyalkylene imine of molecular weight above 600 and a water-soluble dye containing a plurality of substituents reactive to aliphatic amino groups. The pH of the single aqueous phase is adjusted so that no insoluble reaction products are formed within 24 hours at ambient temperature. The textile material after treatment is heated to promote reaction between the polyalkylene imine and the dyestuff.

The above process is applicable to a wide range of textile substrates including cellulose, polyamides and polyesters and blends thereof. It showed many desirable features, e.g. fixations close to 100% could be obtained on a wide range of substrates and materials could be coloured with a single dyestuff type and sold without the need for extensive washing to remove unfixed dyestuff. However, when the process was used with the polyalkylene imines most freely available at the time the process was invented, a major deficiency was observed namely the colouration was often dull and exhibited fading and yellowing on exposure to light. We have now discovered a means of minimising this defect.

The polyalkylene imines most freely available were manufactured by polymerising monomeric alkylene imines, e.g. propylene or ethylene imine. These materials always have a branched structure, i.e. the

polymeric chain was not only extended, for example via $CH_2CH_2NH$ groups but also branched at structural units of the form:

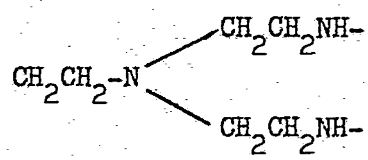

We have now found that the defects such as fading and yellowing of the coloured textile material are minimised when the polyalkylene imine used in the process of UK 1409568 contains only linear polyalkylene imine chains, i.e. free from branching at nitrogen atoms.

Accordingly, this invention provides a process for colouring textile materials by impregnating the material with a water-soluble polyalkylene imine compound of molecular weight greater than 600 and a water-soluble dye having a plurality of substituents in the molecule which react with aliphatically-bound amino groups, and subsequently heating the impregnated material to a temperature at which the dye reacts with the polyalkylene imine compound to form a water-insoluble coloured polymer, the dyestuff and the polyalkylene imine being dissolved in a single aqueous phase at a sufficiently low pH to limit the reaction taking place within 24 hours at ambient temperatures to formation of water-soluble reaction products only, and the resulting solution used for impregnation of the textile material, wherein the polyalkylene imine contains only linear polyalkylene imine chains.

The polyalkylene imines for use in the process of the present invention are characterised by the presence of chains of the formula:

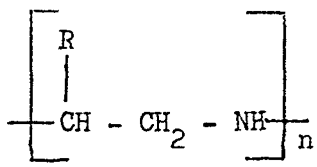

where n is an integer greater than 1. In preferred compounds R is $CH_3$ or especially H. Materials for use in the present process are often of the form:

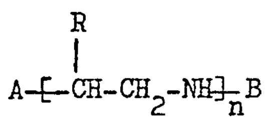

where A and B are monofunctional end groups, e.g. H, or OH.

One of A or B may be polyfunctional in which case the polyalkylene imine will contain more than one chain of the formula:

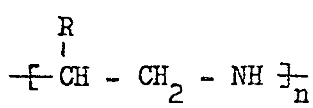

and when its functionality is three or more the overall polyalkylene imine material will be branched rather than linear. Such materials are suitable providing they fulfil the essential condition that the individual chains of alkylene imine units are free from branching at tertiary nitrogen atoms. Likewise the polyalkylene imine chains may be of a copolymeric nature in which the units

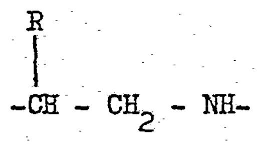

are interrupted in a random or block fashion by other units. These other units may themselves be of a single or polymeric character and may be linear or branched. Where such other units are present we believe it is desirable they should be free of tertiary nitrogen atoms.

Materials containing linear polyalkylene imine chains cannot usually be obtained from the polymerisation of alkylene imines. Suitable materials can however be obtained by other routes, e.g. poly 2-ethyl-2-oxazoline when subjected to hydrolysis yields a linear polyethylene imine. The hydrolysis may be complete or partial in which case the material is a copolymer of units have the formula $-CH_2CH_2NH-$ and

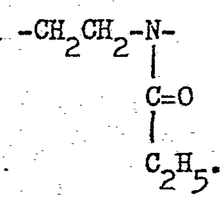

Poly 2-ethyl-2-oxazoline and derivatives may be obtained from Dow Chemical Company.

Molecular weight of the material is not critical e.g. values ranging from 1000 to 1,000,000 may be satisfactorily used though values of above 10,000 are usually preferred.

The dyestuffs used in the process must have two substituents in the molecule capable of reacting with aliphatically bound amino groups so that cross-linking of the polyalkylene imine compound will take place on heating. Typical substituents of this kind are, for example, halogen atoms, i.e. fluorine or especially chlorine, or vinyl or sulphato groups which are bound in a α- or β-position

to the carbonyl or sulphonyl group of an aliphatic acyl radical, or in ortho position to a nitrogen atom in a diazine or triazine heterocyclic nucleus. The following list describes examples of groups which contain one or more suitable substituents of this kind:

di- and tri-chloropyrimidinyl,
sulphatoethylsulphonyl,
sulphatoethylsulphonylamino,
5-chloro-6-methyl-2-methylsulphonylpyrimid-4-yl,
2,4-difluoro-5-chloropyrimidin-6-yl,
β-(4,5-dichloropyridaz-6-on-1-yl)propionyl,
acryloyl,
β-phenylsulphonylpropionylamino,
2,4-dichloropyrimid-4-ylcarbonyl,
2-chlorobenzthiazol-6-ylcarbonyl,
1,4-dichlorophthalazin-6-ylcarbonyl,
dichloroquinoxalinylcarbonyl,
β-chloroethylaminosulphonyl,
dichloro-s-triazinyl, and
monochloro- or monofluoro-s-triazinyl groups containing amino, etherified hydroxy or anilino or substituted anilino groups. Other suitably reactive fluorine or chlorine atoms may be present on suitable pyridine or activated,e.g 1,3-dicyano-phenyl groups.The requirement that the dye should contain more than one substituent of the kind stated, may be fulfilled, e.g. by the dye having at least one of the listed groups containing more than one of these substituents, or by having more than one of the groups containing a single substituent. The dyes may include, e.g. members of the formazan, triphendioxazine, triphenylmethane, xanthene, phenazine, phthalocyanine, anthraquinone and azo, including monoazo, disazo and metal complex azo series.

In the aqueous preparation containing the polyalkylene imine and the dyestuff, the pH conditions have to be such that interaction is slowed to the point where water-insoluble condensation products are not formed for at least 24 hours. The pH conditions for different dyestuffs will vary since there is a range of activity in the substituents capable of being used for this purpose. Thus, for example, the first chlorine atom in a dichloro-s-triazine group reacts much more readily than the second; or more readily than the chlorine atom of a chloromethoxy-s-triazine group which in turn reacts more readily than the chlorine atom of a chloroamino-s-triazine, a chloroanilino-s-triazine, a di- or trichloropyrimidine or a chloroethylsulphonyl group. With some dyes having substituents of low activity, the reaction with the polyalkylene imine can be sufficiently slow for no special measures to be taken. However, where the substituents are so reactive that condensation to form water-insoluble products takes place quickly at ambient temperatures, it is necessary to lower the pH of the mixture, e.g. to a pH of 8 or below by adding a suitable amount of acid. The actual pH necessary to give a useful effect is readily determined by simple experiment, but in general a pH of lower than 4 is undesirable. For the more reactive dyes, e.g. those containing the dichloro-s-triazine radical, a pH of 4-6 is convenient.

The acid which is used to control the pH of the aqueous preparation may be an inorganic or organic acid, but is preferably an organic acid, more especially an organic carboxylic acid, and above all an aliphatic carboxylic acid which is volatile at the temperature used in the subsequent heating stage. As examples of acids which may be used, there may be mentioned hydrochloric acid,

sulphuric acid, formic acid, propionic acid, butyric acid, oxalic acid, succinic acid, lactic acid, methane sulphonic acid and, preferably, acetic acid.

Alternatively, the desired pH can be obtained by mixing an appropriate amount of an ammonium or volatile amine salt of an acid with the polyalkylene imine and heating to remove the liberated ammonia or amine; as examples of salts which may be used in this connection, there may be mentioned ammonium chloride, ammonium acetate, ammonium formate, ammonium bicarbonate and ammonium carbamate.

It is to be understood that in making the aqueous preparation, the dyestuff is preferably dissolved in water, the solution is neutralised and added to a solution of the polyalkylene imine which has already been brought to the desired pH by one of the methods described above.

Textile materials which may be coloured by the new process include natural proteins, synthetic polyamides, polyacrylonitrile, cellulose acetates, but more especially cotton, viscose rayon, including polynosic and high wet modulus regenerated cellulose, linen and other essentially cellulosic fibres and union fibres of the above, e.g. polyester/cotton, polyester/wool, synthetic polyamide/wool, polyamide/cellulose triacetate, acrylic/cotton, acrylic/viscose rayon and acrylic/wool in the form of loose fibres, slivers, yarns, threads, woven, knitted, braided or otherwise interlaced, or unwoven sheet materials.

Impregnation of the textile material with the aqueous preparation may be carried out, e.g. by padding, spraying, contact with a transfer roller or the usual printing methods, e.g. by roller, screen or block.

Printing by the new colouration process can be effected by incorporating a thickener in the aqueous preparation to form a thickened printing paste, applying the latter to the textile material by any conventional method, e.g. by roller, screen, stencil or block, then heating, e.g. at a temperature of from 80 to 180°C, to effect reaction between the dyestuff and the poly-alkylene imine. If desired, the printed material can be dried at a more moderate temperature, e.g. at about 60°C, before heating to effect reaction.

As thickeners, there are preferably used those which are neutral and leave little solid residue after the heating step so that washing to remove adjuvants after the colouration process can be reduced to a minimum. As examples of these, there may be mentioned polyacrylamide or polyethylene glycols of high molecular weight, water-in-oil, oil-in-water, and water-in-oil-in-water emulsions in which the oil is a liquid volatile at the subsequent heating temperature, e.g. white spirit.

Dyeing by the new colouration process can be effected by padding the material with the above-mentioned aqueous preparation, optionally containing a migration inhibitor, e.g. an alkyl naphthalene sulphonate, a mild oxidising agent, e.g. sodium-m-nitrobenzene sulphonate and, if necessary, a solubilising agent, e.g. urea and then, if desired after an intermediate drying step, the material is baked for a short time to effect reaction between the dyestuff and the poly-alkylene imine.

The new process provides a method for colouration of textile materials, especially cellulose, having advantages of the process of UK 1409568 namely, the ability to colour a wide range of textile materials, including union materials, using only a single dyestuff or

mixtures of dyestuffs of the same kind in the colouration process, the avoidance of the use of alkali in the case of colouration of cellulose by conventional reactive dyes and minimum after-processing to remove unfixed dyestuff. In addition, the new process gives improved brightness of shade and the coloured textile materials show good resistance fading and discolouration on exposure to light.

The invention is illustrated by the following Examples in which parts and percentages are by weight.

Example 1

5 Parts of a 30% solution of a linear polyethyleneimine (Mol. wt. approx. 200,000) obtained by partial hydrolysis of poly 2-ethyl-2-oxazoline,such that approx. 68% of the acyl groups are removed, is stirred into a solution of 4 parts of urea, 3 parts of a 20% aqueous solution of Matexil PN-PR (an emulsifying agent), 1 part of acetic acid and 11 parts of water. 3 Parts of Procion Yellow MX-R (a reactive dyestuff bearing a dichlorotriazinyl group) in 23 parts of warm water is added after 50 parts of white spirit is emulsified into the product to give a thickened paste. This paste is applied by conventional means, i.e. with roller or screen printing apparatus, to a mercerised cotton fabric. The print is dried at 70°C for 5 minutes and reaction between dyestuff and polymer completed by a hot air treatment at 120°C for 1 minute. A cold rinse is given to remove traces of unfixed dye.

A yellow effect on a white ground is produced that has and retains the brightness generally achieved when this dyestuff is fixed by conventional alkaline fixation techniques followed by hot washings. The print paste can be stored for 24 hours or more without deposition of coloured solid.

Similar prints using polymerised ethylene imines give much duller colouration.

Example 2

The dyestuff of Example 1 can be replaced by 3 parts of Procion Turquoise SP-2G (a reactive dyestuff bearing approx. 2.5 2-sulpho-4-methoxy-triazin-2-yl groups per molecule). The paste is prepared, printed and fixed as in Example 1 to give a blue effect on a white ground. The brightness of the printed design is comparable to that obtained by conventional alkaline fixation of Procion Turquoise SP-2G.

The print paste does not deposit coloured solid during 24 hours of storage.

Example 3

1 Part of formic acid is used to replace the acetic acid of Example 1 to give a similar result.

Example 4

1 Part of formic acid is used to replace the acetic acid of Example 2 to give a similar result.

Example 5

The paste of Example 1 is applied to a polyester/cellulose blended fabric (e.g. 50/50 causticised polyester/cotton) and fixed as in Example 1 to give a similar result.

Example 6

1 Part of citric acid, 4 parts of urea and 1 part of a medium viscosity sodium alginate (i.e. Manutex F, Alginate Industries Ltd) are added with vigorous stirring to 46 parts of water. 5 Parts of the linear polyethylene imine as described in Example 1 are added with stirring to the above mixture. To this product is added with stirring a solution of 3 parts of Procion Yellow MX-R in 40 parts of water.

The above solution is padded on to a mercerised cotton fabric, dried at 70°C for 5 minutes, and given a treatment with hot air at 120°C for 1 minute followed by a cold water rinse. A yellow dyed fabric is produced of comparable brightness to that obtained by conventional alkaline fixation and hot wash-ff.

Example 7

Similar results are obtained when the procedure of Example 1 is followed using a linear polyethylene imine which is an essentially fully hydrolysed poly-2-ethyl-2-oxazoline.

Examples 8-25

The procedure of Example 1 is repeated replacing the 3 parts of Procion Yellow MX-R with 2 parts of the dyestuffs given in column II of the following table. The colour of the printed effect is given in column III. The dichlorotriazinyl amino group in the table is the 4,6-dichlorotriazin-2-ylamino group.

| I<br>Example | II<br>Dyestuff | III<br>Colour |
|---|---|---|
| 8 | 2-[2-ureido-4-(dichlorotriazinylamino)-phenylazo]naphthalene-3,6,8-trisulphonic acid | Yellow |
| 9 | 4-[4-N-methyl dichlorotriazinylaminophenylazo]-4'-nitrostilbene-2,2'-disulphonic acid | " |
| 10 | 1-hydroxy-2-(1-sulphonaphth-2'-ylazo)-8-(dichlorotriazinylamino) naphthalene-3,6-disulphonic acid | Red |
| 11 | 60:40 mixture of 1-hydroxy-2-(2-sulphophenylazo)-6-(dichlorotriazinylamino)-naphthalene-3-sulphonic acid and 1-hydroxy-2-phenylazo-8-(dichlorotriazinylamino)-3,6-disulphonic acid | Scarlet |
| 12 | 1:2 Chromium complex of 1-hydroxy-2-(2-carboxyphenylazo)-6-(dichlorotriazinylamino)-naphthalene-3-sulphonic acid | Brown |
| 13 | 1-[4-(2,5-disulphophenylazo)-2,5-dimethylphenylazo]-4-(dichlorotriazinylamino)-naphthalene-5-sulphonic acid | " |
| 14 | $CuPc(SO_3H)_{2.5}(SO_2NHC_2H_4.NH$ dichlorotriazinyl$)_{1.5}$<br>CuPc = copper phthalocyanine | Turquoise |

| I Example | II Dyestuff | III Colour |
|---|---|---|
| 15 | 1-amino-8-hydroxy-2-(1,5-disulphonaphth-2-ylazo)-7-[2-sulpho-5-(dichlorotriazinylamino)phenylazo]naphthalene-3,6-disulphonic acid | Blue |
| 16 | 1-amino-2-sulpho-4-[3-(dichlorotriazinylamino)-4-sulphophenylamino]-anthraquinone | " |
| 17 | 1:1 copper complex of 2-[4-(2,5-disulphophenylazo)-3-methyl-2-hydroxyphenylazo]-1-hydroxy-3-sulpho-6-(N-methyl dichlorotriazinylamino)naphthalene | Navy blue |
| 18 | 1-amino-4-(4-dichlorotriazinylamino-2-sulphophenylazo) phenylamino anthraquinone-2,5- or 2,8-disulphonic acid | Olive |
| 19 | 2,9-di-(4-dichlorotriazinylamino-2,5-disulphophenylamino)-6,13-dichlorotriphenodioxazine-1,8-disulphonic acid | Blue |
| 20 | 3-(N-ethylsulphobenzylamino)-7-(4-dichlorotriazinylamino-2-sulphophenylamino)-5-(4-methoxy-3-sulphophenyl)phenazine | " |

| I Example | II Dyestuff | III Colour |
|---|---|---|
| 21 | 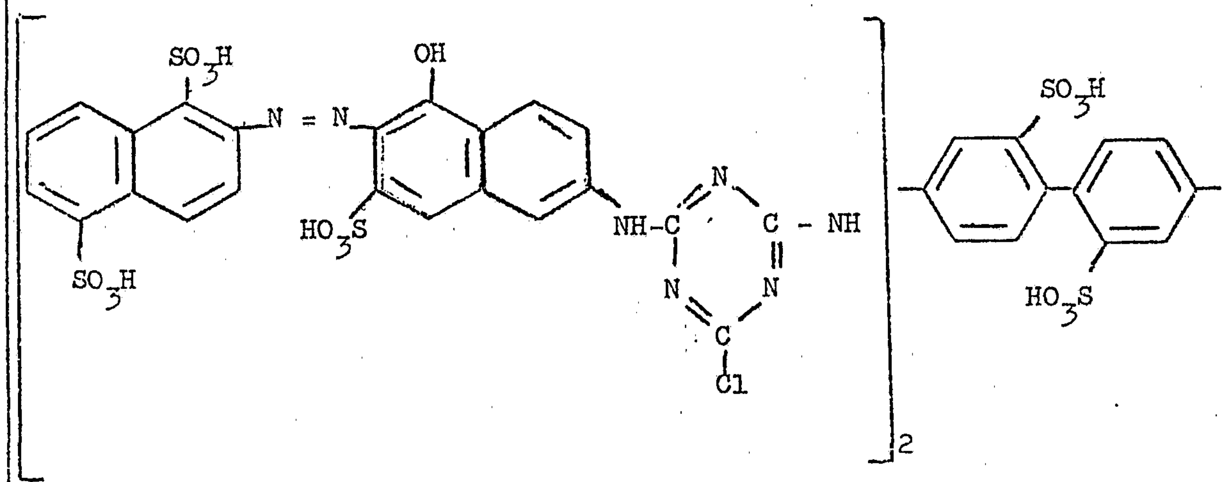 | Orange |
| 22 | 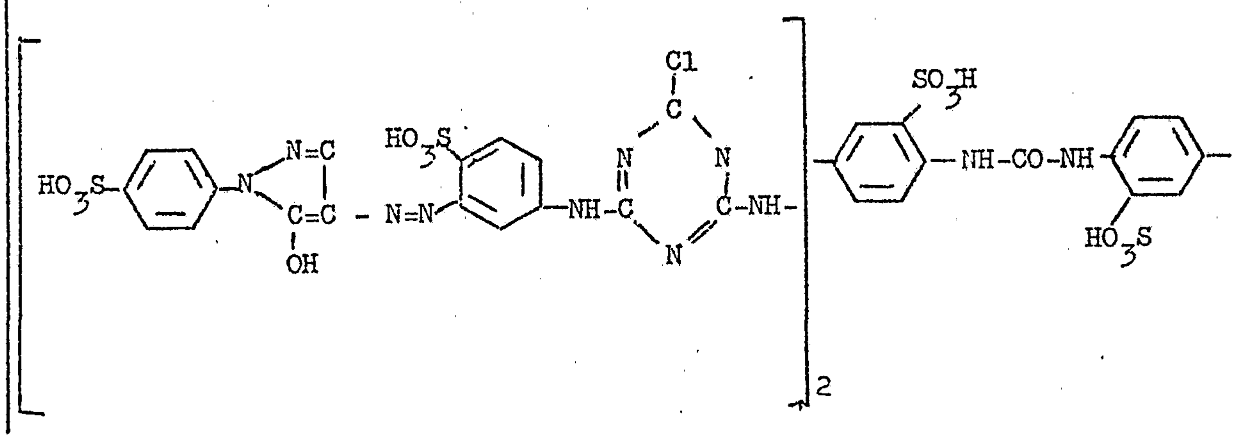 | Yellow |

| I Example | II Dyestuff | III Colour |
|---|---|---|
| 23 | 2,9-di[2-{6-(2,5-disulphophenylamino)-4-(3-carboxypyridinium-1-yl)-s-triazin-2-ylamino}ethylamino]-6,13-dichlorotriphenodioxazine-1,8-disulphonic acid | Blue |
| 24 | Mixed 1:2 chromium and cobalt complex of 2-(2-hydroxy-5-nitrophenylazo)-1-hydroxy-8-(4-chloro-6-amino-s-triazin-2-ylamino)naphthalene-3,6-disulphonic acid | Black |
| 25 | 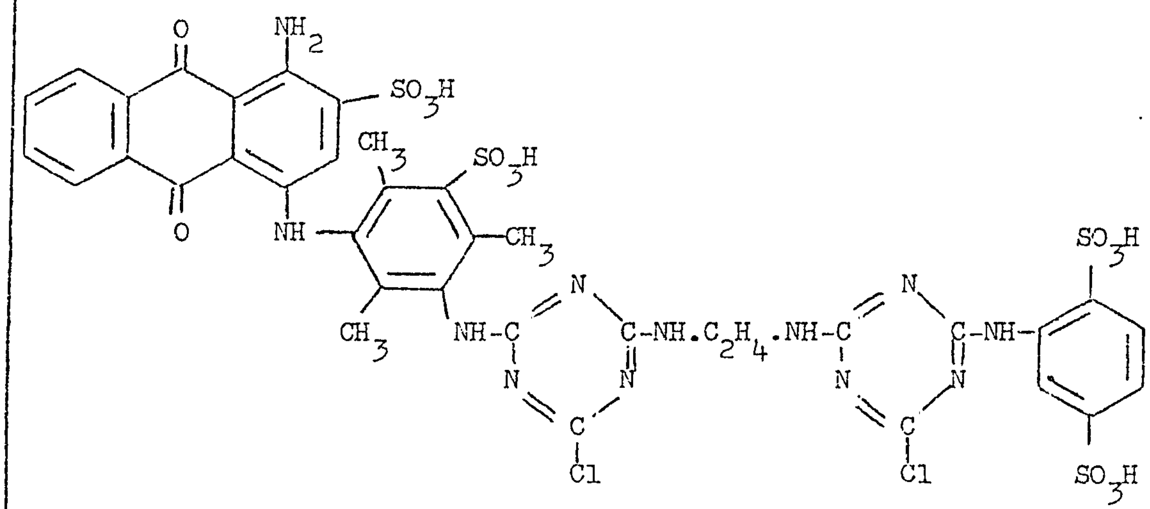 | Blue |

Examples 26-30

The 5 parts of 30% solution of linear polyethylene imine used in Examples 1, 8, 10, 12, 17, 21 and 25 is replaced in every case by the following polyethylene imine solutions from partial hydrolysis of poly-2-ethyl-2-oxazoline adjusting the quantity to provide the same amount of 100% material i.e. 1.5 parts. The water in the formulations is also adjusted correspondingly. In all instances essentially similar results are obtained.

| Example | POLYETHYLENE IMINE SOLUTION | | |
|---|---|---|---|
| | Strength | Degree of hydrolysis | Molecular weight |
| 26 | 40% | 78% | 60,000 |
| 27 | 100% | 80% | 100,000 |
| 28 | 19% | 12% | 265,000 |
| 29 | 100% | 21% | 265,000 |
| 30 | 16% | 54% | 1,000,000 |

BAD ORIGINAL

CLAIMS

1. A process for colouring textile materials by impregnating the material with a water-soluble polyalkylene imine compound of molecular weight greater than 600 and a water-soluble dye having a plurality of substituents in the molecule which react with aliphatically-bound amino groups, and subsequently heating the impregnated material to a temperature at which the dye reacts with the polyalkylene imine compound to form a water-insoluble coloured polymer, the dyestuff and the polyalkylene imine being dissolved in a single aqueous phase at a sufficiently low pH to limit the reaction taking place within 24 hours at ambient temperatures to formation of water-soluble reaction products only, and the resulting solution used for impregnation of the textile material, wherein the polyalkylene imine contains only linear polyalkylene imine chains.

2. A process as claimed in claim 1 wherein the polyalkylene imine has chains of the formula:

$$-\!\left[\begin{array}{l}R\\ |\\ CH - CH_2 - NH\end{array}\right]_n\!-$$

wherein R is $CH_3$ or H and n is an integer greater than 1.

3. A process as claimed in claim 2 wherein R is H.

4. A process as claimed in any one of claims 1 to 3 wherein the polyalkylene imine is a completely or partially hydrolysed poly 2-ethyl-2-oxazoline.

5. A process as claimed in any one of claims 1 to 4 wherein the dyestuff has a dichlorotriazinyl group.

BAD ORIGINAL